# EUROPEAN PATENT SPECIFICATION

(11) **EP 0 307 005 B1**
(45) Date of publication and mention of the grant of the patent: **02.07.1997**
(21) Application number: 88115599.8
(22) Date of filing: 24.04.1985
(51) Int. Cl.: B29C 41/22, B29C 41/04

(54) **Multi-colour plastic shells**
Mehrfarbige Kunststoffschalen
Coquilles multi-colorées en matière plastique

(30) Priority: 25.05.1984 US 614004
(43) Date of publication of application: 15.03.1989
(62) Divisional of application: 85302859.5
(73) Proprietor: DAVIDSON TEXTRON INC., Dover New Hampshire 03820 (US)
(72) Inventor: Gray, John D., New Durham New Hampshire 03855 (US)
(74) Representative: Adkins, Michael

(56) References cited:
- GB-A- 968 760
- PATENT ABSTRACTS OF JAPAN, vol. 9, no. 11 (M-351)[1734], 18th January 1985; & JP-A-59 159 309 (INOUE EMU TEE) 08-09-1984

## Description

This invention pertains to an improved plastic shell.

The automotive industry has turned to the use of interior trim components such as door panels comprising a polyvinyl chloride shell. See, for example, the trim components disclosed in U.S. Patent No. 3,123,403. The acceptance of such components has been because inter alia this type of construction permits a wide latitude in styling and colour, and grain effects which are most desired particularly in the interior design of automobiles.

The current state of the art includes a pre-formed grained vinyl shell made from dry thermoplastic powder particles which are applied to a heated shell mount from a powder box to form a continuous monochromatic one-piece shell.

In order to enhance the interior decor of an automobile, interior door panels and other parts have been prepared which include two separate plastic shell sections formed from different coloured plastic joined at a connection joint.

The use of multi-colour plastic is also known in the manufacture of coloured filaments. Such manufacture includes use of compartmented spinning head for making two-coloured yarn as disclosed in US 3,049,397.

Apparatus and method for multiple coloured thermoplastic floor materials are set forth in US 3,383,442.

JP-A-59 159 309 describes a method of forming a one piece integrally cast plastic shell according to the preamble of Claim 1. However the segments of the shell merely join by means of a butt joint which is disadvantageous from a point of view of strength.

An object of the present invention is to provide a one piece integrally cast plastic shell which provides an improved joint between segments thereof.

According to the invention there is provided a one piece integrally cast plastic shell according to the characterising portion of Claim 1.

A more complete understanding of the invention will be apparent to those skilled in the art from the detailed description by way of example, of various embodiments of the invention. In the accompanying drawings:
Fig 1 is a schematic view of a single-piece multi-colour panel shown with associated component parts of an automotive vehicle door panel;
Fig 2 is a diagrammatic sectional view of a mould component;
Fig 3 is a diagrammatic sectional view of a powder box sealed to the mould of Fig 2 in a pre-release position;
Fig 4 is a sectional view similar to Fig 3 showing the powder box and mould in a powder release orientation; and
Fig 5 illustrates the sequence of steps in a process according to the present invention.

The description of the shell of the present invention will be with reference to the production of plastic thin-walled shells for a typical automotive part such as an interior door panel, consoles and instrument panels.

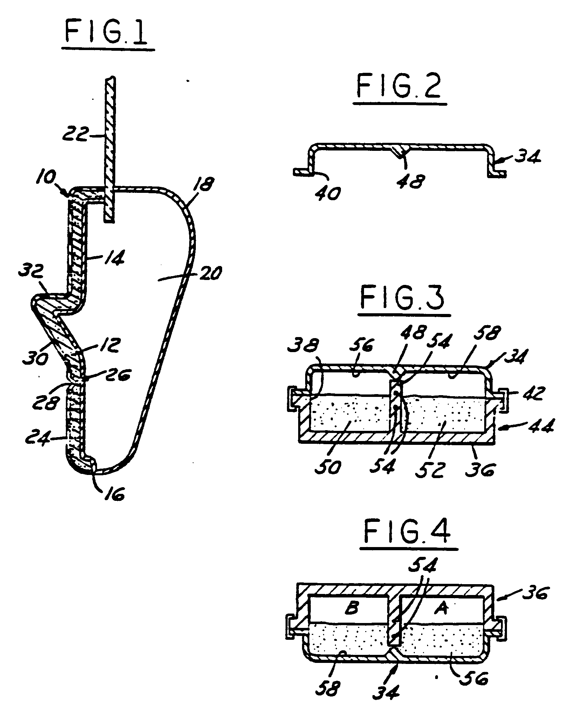

Figure 1 shows a typical automobile door panel application of a multi-colour, single-piece interior plastic shell 10. The shell 10, preferably made of polyvinyl chloride material, is backed by a layer of polyurethane foam 12 bonded to the shell 10 by a mould process such as in USPN 3,123,403, issued March 3, 1964 for Automobile Arm Rest. An interior reinforcing insert 14 is connected at a joint 16 to an outer door shell 18 to form an interior space 20 for window lift mechanism (not shown) to raise and lower a window 22.

The shell 10 is a one-piece plastic part with an integral lower panel 24 of a drycast plastic having a first colour, and includes an integral joint 26 which is at the base of a recessed groove 28. The groove 28 forms a transition to an integrally formed upper panel 30 including an armrest segment 32 formed of drycast plastic having a second colour contrasting or complementing the colour of the first panel 24 or other interior components. For example the upper panel can be red, blue, yellow or beige to contrast with or complement the interior colour of seats, headliners, crashpads and the like. The lower panel 24 can be coloured a deeper complementary tone colour of a character which has a low impact or scuff display character.

Referring to Figures 2-4, a powder moulding process line is schematically shown as including selectively heated mould 34. A powder box 36 is operated between raised and lowered positions with respect to the mould 34 by suitable handling equipment, one type of which is specifically set forth in co-pending USSN 500,760 filed June 3, 1983 for Mould Loading Method and Apparatus.

The box 36 further includes an upper open end 38 which is configured to cover the planar extent of an opening 40 to mould 34.

Clamp means 42 join and seal the powder charge box 36 to mould 34 when the box 36 is elevated to the position shown in Figure 3, hereinafter referred to as the "mould-up" position.

As a result, the interior of box 36 and the interior of mould 34 form a closed system 44 having powder charges in the box 36.

In accordance with the process and apparatus of the present invention, the box 36 is provided with a divider 46 and the mould 34 has a joint-forming rib 48 that contact each other when the box and mould are joined.

The divider 46 and rib 48 form two separate compartments 50,52 each containing a charge of plastic powder material of a different colour (Colour A in 50, Colour B in 52).

The next process step includes concurrent rotation of the closed system 44 about axis 54 defined by trunnions means of the type set forth in co-pending USSN 500,760 through 180° relative to the Figure 3 position.

At Figure 4 a fill step of the process takes place in which thermoplastic powder is distributed evenly throughout the mould opening 40. A resultant even build-up of plastic powder occurs on preheated surfaces 56,58 of the mould 34. The inverted mould position shown in Figure 4 will hereinafter be referred to as the "mould-down" position.

Following the fill step, the joined mould 34 and charge box 36 are again rotated 180° so that the mould 34 is located vertically above the box 36 in the mould-up position.

An air-jet system of the type shown in the co-pending USSN 500,760 may be used to dislodge excess powder from the walls of the mould so that the dislodged material will flow by gravity return to the interior of the box for collection and reuse in the system.

A powder fuse cycle is then carried out in accordance with known practice wherein the moulded powder is completely fused into the desired thin-walled hollow part. Before the fuse cycle the charge box is unclamped from the inverted mould 34 and the box 36 is returned to a powder make-up position. Thereafter the mould 34 (with the powder cast to the surface) is heated further to fuse the powder, then is cooled and rotated 180° into a strip position corresponding to the mould-down position. Make-up powder of appropriate colour is fed to the multiple separate colour compartments.

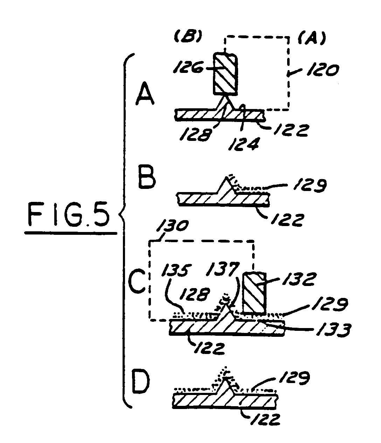

The figure 5 process sequence in accordance with the invention includes the steps of attaching and sealing a first colour a powder box 120 (shown in dotted lines with a fragmentary sectioned wall) to a mould 122 to cover only mould surface 124 with one colour of powder by use of a box partition 126 engaging a mould rib 128 during a first fill phase as shown in Fig 9A. The mould and powder box are then rotated to the dump position, excess material is dislodged and the powder box 120 is separated from the mould 122. The cast colour A on mould 122 is shown at 129 in Fig 9B.

A second colour box 130 is then attached to the mould 122 and sealed by a partition 132 offset from rib 128 as shown and wherein the end 133 of partition 132 mates to the previously cast colour layer 129 on surface 124. Then the parts assume the fill or mould-down position and powder layer 135 of a second colour overlaps Colour A of region 137 as shown in Fig 9C to form an integral joint between the two colours.

The mould and powder box are rotated to the dump position, excess material is dislodged and the colour box 130 is separated from mould 122. The curing cycle is completed in the mould-up position to form the one-piece, two-colour skin shown with the mould in Fig 9D.

A typical powder casting process for a two-colour door panel includes the following sequence.
1. Preheat tool in oven to temperature between 121°C (250°F) and 199°C (390°F).
2. After mould cast temperature is reached, attach the powder box to the mould.
3. Rotate box and mould 1-1/2 turns clockwise and 1-1/2 turns counterclockwise.
4. Dwell time on top is approximately eight seconds (for additional part thickness, add dwell time).
5. Rotate 180° and unclamp.
6. Return the mould to a cure oven and heat for 2.5 min. in the mould-down position and 2.5 min. in the reverse mould-up position

Examples of suitable mould heating processes for use with the process and apparatus of the present invention include mould temperature control by heated and cooled air or oil heating and cooling flow as set forth in USPN 4,217,325 issued August 12, 1980 to D. Colby. Suitable thermoplastic powders include plasticised polyvinyl chlorides and related vinyl resins in dry powder form for ease of gravity flow from the powder charge box 36 during both fill and return steps. Typical examples of parts, plastic materials and mould processes include the following:

Examples of parts that have been made by the PVC powder moulding process include a door panel shell having a mould volume of approximately six (6) cubic feet.

PVC resin, plasticizer, stabilizer, release agents and colour pigments are combined in a high intensity mixer to produce a dry, flowable powder of each desired colour. The process is known in the industry as dry-blending.

The various compound components may be selected as to type and ratio to provide the properties required both for the finished product and for ease of processing. Physical properties will not be too dissimilar from those obtained with liquid plastisol which is also used to manufacture similar products but has an inherent weakness for forming objectionable drips and runs when made in complex shapes.

Processing properties are such that when melting of the plastic powder occurs, densification results in exact reproduction of minute detail such as grain marks and stitches engraved in the mould surface.

Mould preheating temperature may range from 250°F to 390°F. Since the thickness of the finished product is also governed by the time the powder contacts the mould, it should be understood that simultaneous charging of the powder to the mould can be of definite advantage. Also, if certain areas of the mould can be made to have a lower pre-heated temperature than others, it will permit moulding a thinner shell in those areas, since both temperature and mould-filled time determine the final thickness of the shell. Therefore, a very flexible range, for mould-filled time, of one second to ten seconds or more has been established.

Depending on formulation, complete melting or fusion of the PVC powder can occur when mould temperatures reach 177°C (350°F) to 232°C (450°F).

After fusion, the mould is cooled to a temperature which will facilitate removal of the shell without damage.

Specifically the process and apparatus of the present invention enable even and complete distribution of thermoplastic powder material onto mould surfaces to form large, long, thin-wall single-piece two-colour or more shells for interior door panels and the like formed during short cycle mould cycles in limited plant floor space.

## Claims

1. A one-piece integrally cast plastic shell comprising a first shell segment formed of cured plastic powder (129) having a first colour; a second shell segment joining with said first shell segment formed of a cured plastic powder (135) having a second colour and a joint formed integrally of each of the first and second shell segments along an integral joint line (137) formed therebetween, said shell having a groove on a moulded side of the shell and a projection on its side opposite said moulded side, said integral joint line (137) lying within the groove below the moulded side of the shell and in alignment with the projection, said segments each comprising a single layer of single colour having a substantially equal and uniform thickness,
characterised in that the layers overlap each other only at said integral joint line (137), the layer forming the second shell segment overlapping the layer forming the first shell segment both over the thickness of the first segment layer and over a portion of the first segment layer which defines a wall of the groove.

2. A one-piece integrally cast plastic shell according to Claim 1 characterised in that a colour separation line between the two shell segments lies symmetrically along an apex of the groove.

## Patentansprüche

1. Einteilige, einheitlich geformte Plastikschale mit einer ersten aus vulkanisiertem Kunststoffpulver (129) gebildeten Schalensegment, das eine erste Farbe aufweist, einem zweiten, mit dem ersten Schalensegment in Verbindung stehenden, aus vulkanisiertem Kunststoffpulver (135) bestehenden zweiten Schalensegment, das eine zweite Farbe aufweist, und eine zwischen dem ersten und dem zweiten Schalensegment einheitlich angeformte Verbindung, die an einer angeformten Verbindungslinie (137) gebildet ist, wobei die Schale eine Rille auf einer geformten Seite der Schale und einen Vorsprung auf der der geformten Seite gegenüberliegenden Seite aufweist, wobei die integrierte Verbindungslinie (137) in der Rille unterhalb der geformten Seite der Schale und in Ausrichtung mit dem Vorsprung gelegen ist und wobei die Segmente jeweils eine einzelne, eine im wesentlichen gleiche und gleichmäßige Dicke aufweisende Schicht einer einzelnen Farbe aufweisen, **dadurch gekennzeichnet**, daß die Schichten sich lediglich an der gemeinsamen Verbindungslinie (137) überlappen, daß die das zweite Schalensegment bildende Schicht, die das erste Schalensegment bildende Schicht sowohl über die Dicke des ersten Schalensegments als auch über einen Bereich des ersten Schalensegments überlappt, der eine Wand der Rille bildet.

2. Einteilige, einheitlich geformte Plastikschale gemäß Anspruch 1, **dadurch gekennzeichnet**, daß die Farbtrennlinie zwischen den beiden Schalensegmenten symmetrisch entlang des Scheitelpunkts der Rille verläuft.

## Revendications

1. Coquille plastique, moulée en une seule pièce, comprenant un premier segment de coquille formé à partir de poudre plastique durcie (129) et présentant une première couleur ; un deuxième segment de coquille raccordé avec le premier segment de coquille, formé à partir de poudre plastique durcie (135) et présentant une deuxième couleur, et un raccord, ne formant qu'une seule pièce avec le premier et le deuxième segments de coquille, le long d'une ligne de raccordement solidaire (137) formée entre eux, la coquille présentant une rainure, d'un côté moulé de la coquille, et une saillie, de son côté opposé au côté moulé, la ligne de raccordement solidaire (137) étant située à l'intérieur de la rainure, sous le côté moulé de la coquille, et se trouvant en alignement avec la saillie, les segments comprenant, chacun, une couche unique d'une seule couleur présentant une épaisseur sensiblement égale et uniforme, caractérisée en ce que les couches ne se chevauchent qu'au niveau de la ligne de raccordement solidaire (137), la couche formant le deuxième segment de coquille recouvrant la couche formant le premier segment de coquille, à la fois sur l'épaisseur de la couche du premier segment et sur une partie de la couche du premier segment qui définit une paroi de la rainure.

2. Coquille plastique, moulée en une seule pièce, selon la revendication 1, caractérisée en ce que une ligne de séparation des couleurs entre les deux segments de coquille se situe de façon symétrique le long d'un sommet de la rainure.
